# EUROPEAN PATENT APPLICATION

(11) **EP 3 373 655 A1**
(43) Date of publication of application: **12.09.2018**
(21) Application number: 15909468.9
(22) Date of filing: 30.11.2015
(51) Int. Cl.: H04W 48/08, H04W 48/02, H04W 48/12

(54) **METHOD AND USER EQUIPMENT FOR PERFORMING NOTIFICATION OF SYSTEM MESSAGES**

(71) Applicant: Huawei Technologies Co., Ltd., Longgang District Shenzhen, Guangdong 518129 (CN)
(72) Inventor: XU, Kai, Shenzhen Guangdong 518129 (CN); LI, Lanlan, Shenzhen Guangdong 518129 (CN)
(74) Representative: Gill Jennings & Every LLP
(86) International application number: PCT/CN2015/096006
(87) International publication number: WO 2017/091951

(57) **Abstract**

Embodiments of the present invention disclose a system message notification method and user equipment, and relate to the field of communications technologies. The method includes: receiving, by a radio resource control layer of user equipment, a network configuration message sent by a network side, where the network configuration message includes a data service access control parameter; and when a value of the data service access control parameter is 0, sending, by the radio resource control layer, a first notification message to a non-access stratum of the user equipment, where the first notification message is used to indicate that the user equipment is barred from accessing a data service. In the embodiments, a user is notified immediately after a message indicating that the data service is barred is received, so that the user can correctly perform a data service connection operation. In this way, data processing efficiency of the user equipment is improved, and user experience of the user equipment is also improved.

## Description

### TECHNICAL FIELD

Embodiments of the present invention relate to the field of mobile communications technologies, and specifically, to a system message notification method and user equipment.

### BACKGROUND

As mobile communications technologies are widely applied to people's real life, more users choose user equipment such as a mobile phone or a tablet computer as a necessary daily communications tool. In addition, with emerging of the mobile Internet, a user prefers to perform a data service on a mobile phone. For example, the user watches an online video on the mobile phone. Therefore, in this environment, a mobile phone imposes a relatively high data transmission requirement on a wireless communications network.

Long Term Evolution (Long Term Evolution, LTE for short) is long-term evolution of a Universal Mobile Telecommunications System (Universal Mobile Telecommunications System, UMTS for short) technology standard formulated by the 3rd Generation Partnership Project (The 3rd Generation Partnership Project, 3GPP for short) organization. With help of a new technology and a new modulation method, LTE improves a data transmission capability and a data transmission speed of a mobile communications network. For example, an LTE network can provide a download rate of 300 Mbit/s and an upload rate of 75 Mbit/s, and the data transmission rate is higher than that in a 3rd Generation (3rd Generation, 3G for short) mobile communications technology standard. The LTE network can meet a requirement of user equipment for a large quantity of data services in a mobile Internet era. When the user uses user equipment that complies with an LTE technology, after power on, the user equipment searches for a mobile communications network provided by a telecommunications operator, and further initiates a registration request to a base station according to the found mobile communications network that is suitable for registration. If the user equipment successfully registers with the LTE network, the user may enable a data service in the LTE network, and then a graphical user interface of the user equipment generally displays an icon to indicate that the data service is available, so as to inform the user that the user can operate a mobile terminal to perform the data service.

In the prior art, to avoid network congestion in mobile communication, the telecommunications operator may modify a network configuration parameter of the base station. For example, the telecommunications operator may modify a data service access control parameter of the base station, to bar the user equipment from accessing a data service of the mobile communications network, so as to reduce a network congestion risk. Although the base station has modified the parameter to bar the user equipment from accessing the data service, because of stipulation of an existing standard protocol, the user equipment cannot learn that a network side bars the data service. For example, the graphical user interface of the user equipment still displays the icon indicating that the data service is available, and consequently, the user incorrectly determines that the data service is available (which is actually unavailable). The user can find that the data service is unavailable only after performing a data service request action (such as opening a browser to surf the Internet or starting an application that requires a data connection). As a result, very poor user experience is caused, and data processing efficiency of the user equipment is greatly reduced.

### SUMMARY

To resolve the foregoing technical problems, embodiments of the present invention provide a system message notification method and user equipment, so that a user can correctly perform a data service connection operation. In this way, data processing efficiency of the user equipment is improved, and user experience of the user equipment is also improved.

According to a first aspect, an embodiment of the present invention provides a system message notification method, applicable to user equipment in a wireless communications network, where the user equipment is divided into a physical layer, a data link layer, a radio resource control layer, a non-access stratum, and an application layer in logic, and the method includes:
receiving, by the radio resource control layer, a network configuration message sent by a network side, where the network configuration message includes a data service access control parameter; and
when a value of the data service access control parameter is 0, sending, by the radio resource control layer, a first notification message to the non-access stratum, where the first notification message is used to indicate that the user equipment is barred from accessing a data service.

With reference to the first aspect, in a first possible embodiment of the first aspect, the data service access control parameter is specifically an ac-BarringForMO-Data parameter.

With reference to the first aspect or the first embodiment of the first aspect, in a second possible embodiment of the first aspect, the method further includes: after receiving the first notification message, sending, by the non-access stratum, a second notification message to the application layer, where the application layer notifies a user that the data service is currently unavailable.

With reference to the second embodiment of the first aspect, in a third possible embodiment of the first aspect, the user equipment notifies the user in the following manner: playing a voice to the user to indicate that the data service is currently unavailable, or displaying/hiding an icon on a display screen of the user equipment to indicate that the data service is currently unavailable.

With reference to the first aspect, the first embodiment of the first aspect, the second embodiment of the first aspect, or the third embodiment of the first aspect, in a fourth possible implementation of the first aspect, the network configuration message is sent to the user equipment by using a SIB2 message.

According to a second aspect, this technical solution provides user equipment, and the user equipment specifically includes:
a receiving unit, configured to receive a network configuration message sent by a network side, where the network configuration message includes a data service access control parameter;
a determining unit, configured to determine whether a value of the data service access control parameter is 0; and
a notification unit, configured to send a notification message when the value of the data service access control parameter is 0, where the notification message is used to indicate that the user equipment is barred from accessing a data service.

With reference to the second aspect, in a first possible implementation of the second aspect, the user equipment further includes a prompt unit, configured to: receive the notification message of the notification unit, and notify a user that the data service is currently unavailable.

According to a third aspect, user equipment is provided, including:
a display;
one or more processors;
a memory; and
one or more programs, where the one or more programs are stored in the memory and configured to be executed by the one or more processors, the one or more programs include an instruction, and the instruction is used to:
   receive a network configuration message sent by a network side, where the network configuration message includes a data service access control parameter;
   determine whether a value of the data service access control parameter is 0; and
   when the value of the data service access control parameter is 0, send a notification message to notify a user, where the notification message is used to indicate that the user equipment is barred from accessing a data service.

With reference to the third aspect, in a first possible embodiment of the third aspect, the user is notified in the following manner: playing a voice to the user to indicate that the data service is currently unavailable, or displaying/hiding an icon on a display screen of the user equipment to indicate that the data service is currently unavailable.

In the embodiments of the present invention, because the value of the data service access control parameter in the received network configuration message is 0, the user equipment learns that access to the data service of the user equipment is barred, that is, the data service of the user equipment is actually unavailable, and then the user equipment notifies the user, so that the user can correctly perform a data service connection operation. In this way, data processing efficiency of the user equipment is improved, and user experience of the user equipment is also improved.

### BRIEF DESCRIPTION OF DRAWINGS

FIG. 1 is a schematic diagram in which user equipment accesses an LTE network according to an embodiment of the present invention;
FIG. 2 is a schematic diagram of logical layers of user equipment and a base station according to an embodiment of the present invention;
FIG. 3 is a schematic diagram of interaction between an RRC layer of user equipment and a NAS layer of the user equipment and interaction between a user interface module and the NAS layer of the user equipment according to an embodiment of the present invention;
FIG. 4 is a schematic diagram of a graphical user interface of user equipment according to an embodiment of the present invention;
FIG. 5 is a schematic flowchart of a system message notification method according to an embodiment of the present invention;
FIG. 6 is a schematic flowchart of another system message notification method according to an embodiment of the present invention;
FIG. 7 is a schematic diagram of a graphical user interface of user equipment according to an embodiment of the present invention;
FIG. 8 is a schematic structural diagram of user equipment according to an embodiment of the present invention; and
FIG. 9 is a schematic structural diagram of user equipment according to another embodiment of the present invention.

### DESCRIPTION OF EMBODIMENTS

To make the objectives, features, and advantages of the present invention more comprehensible, embodiments of the present invention are described in detail in the following with reference to the accompanying drawings.

The terms used in the embodiments of the present invention are merely for the purpose of illustrating specific embodiments, and are not intended to limit the present invention. The terms "a", "said" and "the" of singular forms used in the embodiments and the appended claims of the present invention are also intended to include plural forms, unless otherwise specified in the context clearly.

It should be understood that although the terms "first", "second", "third", and the like may be used in the embodiments of the present invention to describe various notification messages, the notification messages are not limited to these terms. These terms are merely used to differentiate the notification messages from each other. For example, without departing from the scope of the embodiments of the present invention, a first notification message may also be referred to as a second notification message. Similarly, the second notification message may also be referred to as the first notification message.

Depending on the context, for example, the word "if' used herein may be explained as "while", "when", "in response to determining", or "in response to detecting". Similarly, depending on the context, the phrase "if determining" or "if detecting (a declarative condition or event)" may be explained as "when determining", "in response to determining", "when detecting (a declarative condition or event)", or "in response to detecting (a declarative condition or event)".

It can be understood that user equipment may include a mobile terminal (such as a mobile phone, a tablet computer, or a notebook computer), or may include another communications device. The user equipment is not limited in the following embodiments. In addition, to normally communicate with a radio base station that complies with a 3GPP related standard protocol, the user equipment also needs to comply with the corresponding 3GPP standard protocol. The user equipment implements voice and data services by receiving a radio communication signal sent by the base station.

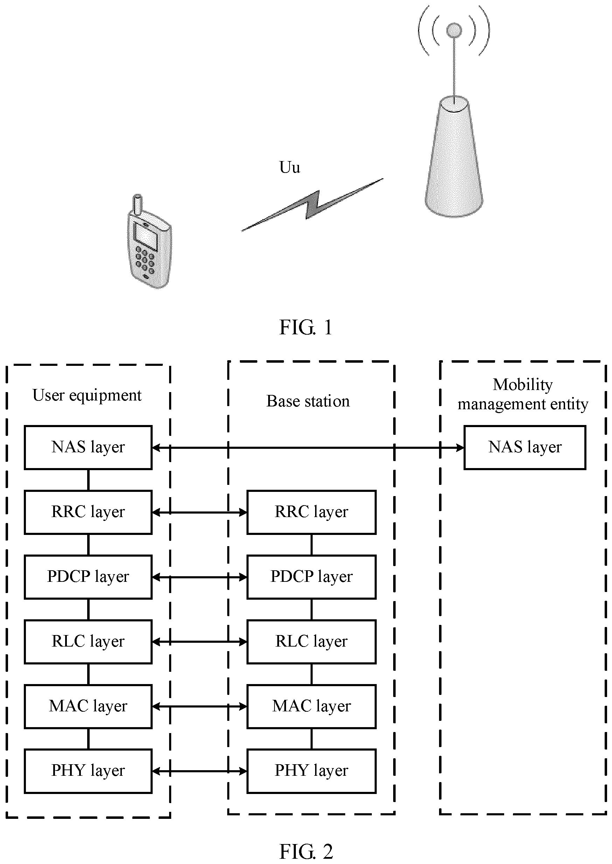

In an LTE network, a network architecture in which user equipment accesses a network is shown in FIG. 1. In FIG. 1, there is a wireless connection between the user equipment and the base station. According to related protocol stipulation of a 3GPP standard organization, a radio interface between the user equipment and the base station is a Uu interface, and a terminal communicates with the base station according to a standard procedure in a 3GPP protocol. As shown in FIG. 2, to implement interconnected wireless communication between the user equipment and the base station (for example, an eNodeB), both the user equipment and the base station may be divided into three protocol layers: a physical layer (that is, a PHY layer), a data link layer (that is, a DLC layer), an application layer, and a non-access stratum in logic according to an OSI (Open System Interconnection Reference Model) framework. The physical layer is mainly used to provide a radio physical channel for transmission of a higher layer service, and this layer is mainly implemented by the base station on a network side. The non-access stratum (Non-Access Stratum, NAS) is a functional layer between a core network and the user equipment. The non-access stratum is defined in contrast to an access stratum. A protocol layer below an RRC layer may be generally referred to as the access stratum, and signaling of the access stratum is a basis of signaling interaction of the non-access stratum. The non-access stratum supports signaling transmission and data transmission between the core network and the user equipment, and mainly includes an authentication function and a security control function. The application layer is directly connected to an application programming interface and is mainly used to provide a common network application service.

The data link layer is further divided into three sublayers: a media access control layer, which is referred to as a MAC layer and mainly provides an interface between a radio link control layer and the physical layer; the radio link control (Radio Link Control) layer, which is referred to as an RLC layer and mainly provides a segmentation service and a retransmission service for the user equipment and control data; and a packet data converge protocol (Packet Data Converge Protocol) layer, which is referred to as a PDCP layer and is mainly used to process a radio resource control message on a control plane and an Internet protocol packet on a user plane. The application layer is mainly a radio resource control (Radio Resource Control) layer, and is referred to as an RRC layer. A main function of the RRC layer is to allocate a radio resource and send related signaling. A main part of control signaling between the user equipment and a UTRAN (UMTS Terrestrial Radio Access Network) is an RRC message. The RRC message carries all parameters for establishing, modifying, and releasing protocol entities of the MAC layer and the physical layer, and further carries some signaling of the non-access stratum.

In addition, a protocol stack of the Uu interface is divided into the control plane and the user plane in terms of function. The control plane is mainly responsible for signaling transmission in a system, and setup, reconfiguration, and releasing of various radio bearer services in 3G mobile communication. The user plane is mainly responsible for user data transmission in the system. A sub-function of a user plane protocol includes: performing header compression, scheduling, encryption, automatic repeat request (ARQ), concatenation, and segmentation on a data packet transmitted by using an air interface. A control plane protocol and the user plane protocol have different functions at each protocol layer. At the RLC layer and the MAC layer, the control plane and the user plane have a same function. The control plane completes encryption and integrity protection of data at the PDCP layer, and the control plane completes system message sending and user equipment paging process at the RRC layer.

In FIG. 2, the NAS layer is used to directly perform signaling interaction between the user equipment and a network element (for example, a mobility management entity MME) in the core network, for example, a procedure of registering the user equipment with the core network. Signaling of the NAS layer is transmitted to the core network by means of transparent transmission by using the base station, and the RRC layer carries the signaling. In the user equipment, signaling interaction between a NAS module and an RRC module is implemented by using an inter-layer interaction message. The LTE network described in this embodiment of the present invention includes an LTE-A network, and a network of an LTE version that may appear subsequently.

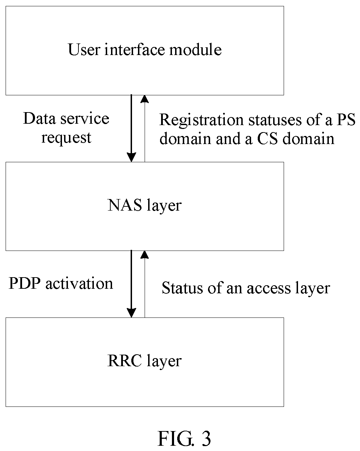

A function module that is responsible for displaying a graphical user interface is a user interface module. When a cell signal in the LTE network is good, after the user equipment registers with the LTE network, a network server configures a correct access point name for the user equipment, so that the user equipment can perform a data service. The data service of the user equipment generally includes uploading a file, downloading a file, browsing a web page, watching a video, or the like. An icon displayed by the graphical user interface of the user equipment is closely related to a current protocol stack status of the user equipment. A relationship between a lower-layer protocol and a software module that is responsible for interface display is shown in FIG. 3. In FIG. 3, the RRC layer is responsible for a process in which the user equipment accesses the network, and the NAS layer is responsible for a process in which the user equipment registers with the core network. The process in which the user equipment registers with the core network may include a PS (Packet Switch) domain registration process and a CS (Circuit Switch) domain registration process. After the user equipment completes a network registration process, if the user equipment finds a cellular cell that can be accessed, the user equipment sends a registration request message to the core network. If the core network successfully authenticates the user equipment, the core network sends a registration permission message to the user equipment. In this case, the user equipment successfully registers with a PS domain of the core network, and the user equipment can perform a data service. After successfully registering with a CS domain, the user equipment can also perform a voice service.

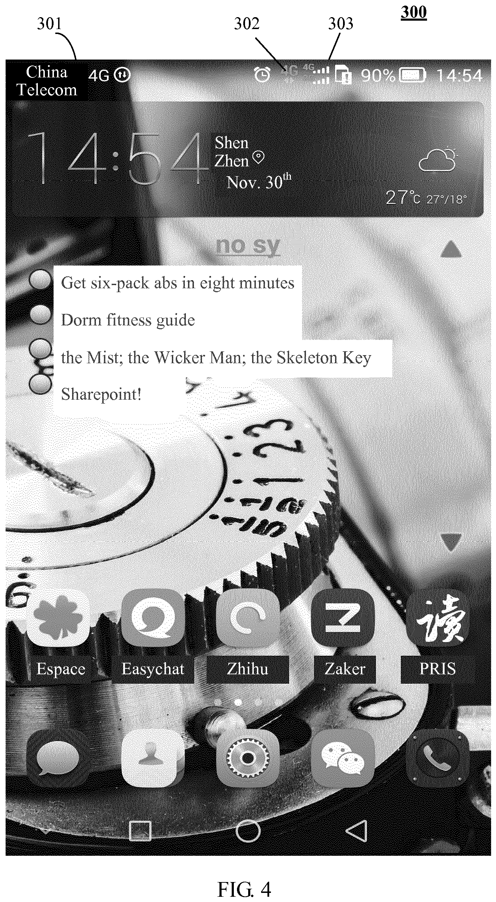

After successfully registering with the network, a terminal notifies, by means of interaction between the NAS layer and the user interface module, the user interface module of status information of registering the terminal with the PS domain and the CS domain. The user interface module controls a terminal interface to display a signal bar icon, a data service icon, and a call service icon. When the terminal can perform the data service after being successfully registered with the PS domain, the graphical user interface of the user equipment displays a display icon indicating that the data service is available. When the terminal can perform the voice service after being successfully registered with the CS domain, the graphical user interface of the user equipment displays a display icon indicating that the voice service is available. In addition, the user interface module can correctly display a corresponding signal bar according to strength of a network side cell radio signal received by the user equipment. A specific graphical user interface is shown in FIG. 4.

To help a user understand a function that can be currently performed by the user equipment, and to implement better interaction between the user equipment and the user, the user equipment generally notifies, by using an icon displayed on the graphical user interface, a current status of the user equipment and a function that can be performed by the user equipment. For example, FIG. 4 is a graphical user interface displayed on a screen of the user equipment. In this graphical user interface, a top bar is a status bar, and an icon 301 indicates that the user equipment accesses a 4G-standard cell. It may be understood that, in another case (for example, 2G/3G), the icon 301 may be displayed in another form to notify the user of a standard of a currently accessed cell. An icon 302 is used to indicate that a data service function of the user equipment is available. An icon 303 indicates signal strength of the currently accessed cell of the user equipment.

It may be understood that, to avoid network congestion in mobile communication, a telecommunications operator may modify a network configuration parameter of the base station on the network side. Specifically, the telecommunications operator may modify a data service access control parameter of the base station. For example, the telecommunications operator modifies the data service access control parameter (ac-BarringForMO-Data) to 0, to bar the user equipment from accessing the data service. In this way, a network congestion risk is reduced. The base station notifies the modified data service access control parameter to the RRC layer of the user equipment according to an existing 3GPP related standard protocol. After the RRC layer of the user equipment receives a message that carries the data service access control parameter, according to stipulation of an existing protocol, the RRC layer of the user equipment does not notify the NAS layer of network-side information indicating that the user equipment is barred from accessing the data service. In this case, in a process in which the user actually uses the user equipment, although the base station on the network side has modified the data service access control parameter, the icon 302 on the graphical user interface of the user equipment still indicates that the data service is available (which is actually unavailable because the data service of the user equipment is barred by the base station), but the user incorrectly determines, according to only the icon 302 displayed on the interface of the user equipment, that the data service is still available. Therefore, when the user performs the data service (for example, views a Facebook message), the user equipment initiates a data service setup process according to an instruction of the user. In this case, the application layer of the user equipment instructs the NAS layer to activate a process of establishing a connection to the PDP on the network side. The NAS layer establishes signaling interaction with the RRC layer, and triggers the RRC layer to establish an RRC connection to the base station. Because the RRC layer learns, according to information in a received system message, that the data service of the user equipment is actually unavailable, the RRC layer notifies the NAS layer that the user equipment is barred by the base station from accessing the data service. In this case, after receiving the notification of the RRC layer, the NAS layer can instruct the application layer to change an icon displayed on the graphical user interface, so as to notify the user that the data service is unavailable. The user cannot learn, in advance by using the icon displayed on the interface, that the data service is unavailable. Instead, the user can find that the data service is unavailable only after performing a data service request action. Consequently, very poor user experience is caused, and data processing efficiency of a mobile terminal is greatly reduced.

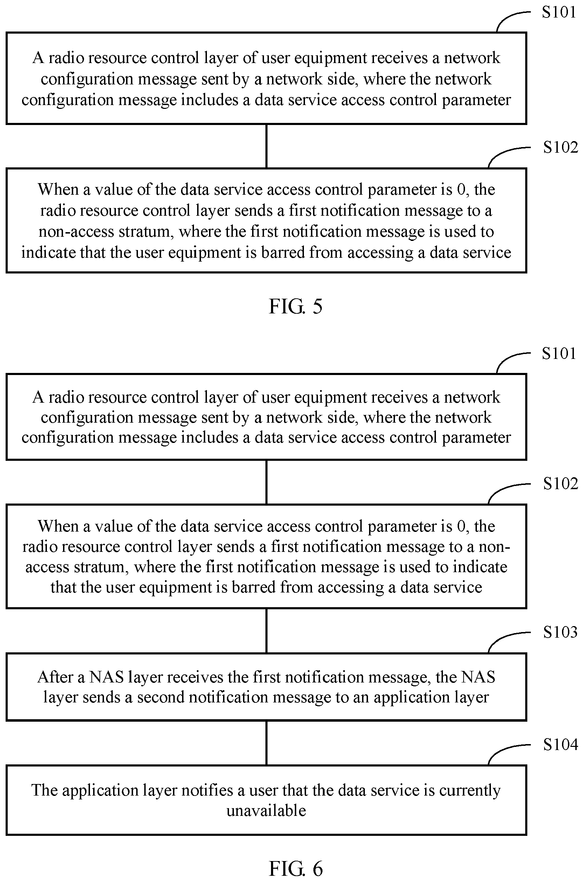

To resolve the foregoing technical problems, an embodiment of the present invention provides a system message notification method, and the method is applied to user equipment in a wireless communications network. The user equipment is divided into a physical layer, a data link layer, a radio resource control layer, a non-access stratum, and an application layer in logic. As shown in FIG. 5, the method specifically includes the following steps.
S101. The radio resource control layer of the user equipment receives a network configuration message sent by a network side, where the network configuration message includes a data service access control parameter.

The network configuration message is generally sent by a base station on the network side to the user equipment by using a system information block 2 (SIB2). The sending action of the base station and the receiving action of the user equipment are generally performed at the RRC layer. The system information block 2 carries various access control parameters. As shown in Table 1, the parameters are mainly as follows:

**Table 1**

| **Parameter name** | **Meaning** |
|---|---|
| ac- BarringF actor | Access control factor |
| | The user equipment performs determining according to a calculated random value RAND and an air-interface information element. When RAND<ac-BarringFactor, it is considered that access to a cell is not barred; or when RAND>=ac-BarringFactor, it is considered that access to a cell is barred. |
| ac-BarringForCSFB | As an access control parameter for a CSFB service, this parameter represents an access probability factor of the CSFB service. If a random number generated by the user equipment is less than the access probability factor, access to the CSFB service is allowed; otherwise, access to the CSFB service is barred. |
| ac-BarringForEmergency | As an access control parameter for an emergency call service, this parameter represents an access-type barred state, and is used to indicate whether the user equipment is allowed to initiate an emergency call. |
| ac-BarringForMO-Data | As an access control parameter for a primary service, this parameter indicates whether to configure access-type barred information for a data service. |
| ac-BarringForMO-Signalling | As an access control parameter for calling signaling, this parameter represents an access probability factor of the signaling. If a random number generated by the user equipment is less than the access probability factor, signaling access is allowed; otherwise, signaling access is barred. |

In Table 1, the parameter ac-BarringForMO-Data is the data service access control parameter, and is used to indicate whether a current cell is allowed to access a data service. For example, if the base station modifies a value of the parameter to 0, it indicates that the cell is barred from accessing the data service.

In addition, a status of the user equipment may be classified into an idle state and a connected state according to stipulation of a 3GPP protocol and according to whether the user equipment has an RRC connection to the base station. A state in which the user equipment has no RRC connection to the base station is referred to as the idle state, and a state in which the user equipment has an RRC connection to the base station is referred to as the connected state. Generally, after receiving a system message of a cellular cell, the user equipment is in an idle state. When the user equipment needs to initiate a data service, the user equipment sends an RRC connection setup request to the base station on the network side. If the user equipment successfully establishes an RRC connection to the base station on the network side, the user equipment enters a connected state. If an initial data service access control parameter (ac-BarringForMO-Data) of the user equipment is not 0, the user equipment successfully registers with a network in a packet switched domain. Generally, a display screen of the user equipment displays an icon to indicate that the data service is available. In addition, when the data service is unavailable for some reason, generally, the display screen of the user equipment hides the icon indicating that the data service is available, or displays another icon indicating that the data service is unavailable.
S102. When a value of the data service access control parameter is 0, the radio resource control layer sends a first notification message to the non-access stratum, where the first notification message is used to indicate that the user equipment is barred from accessing a data service.

To avoid network congestion, a telecommunications operator may modify a network configuration parameter of the base station on the network side. For example, the telecommunications operator modifies the data service access control parameter (ac-BarringForMO-Data) to 0, to bar the user equipment from accessing the data service. In this way, a network congestion risk is reduced. When the value of the data service access control parameter received by the user equipment is 0, the RRC layer sends the first notification message (for example, an inter-layer interaction message) to notify the NAS layer that access to the data service is currently barred, that is, the data service is currently unavailable. For a specific format of the inter-layer interaction message, different equipment vendors may have different implementations, and which are not enumerated herein.

In this embodiment of the present invention, the RRC layer of the user equipment learns, according to the value of the data service access control parameter in the received network configuration message, that access to the data service of the user equipment is barred, that is, the data service of the user equipment is actually unavailable. Therefore, the RRC layer notifies the NAS layer of this message, so that the user equipment notifies, in a user-aware manner, the user that the data service is currently unavailable. In this way, data processing efficiency of the user equipment is greatly improved, and user experience of the user equipment is also improved.

In addition, as shown in FIG. 6, optionally, after the RRC layer sends the first notification message to the NAS layer, the method further includes the following steps:
S103. After the NAS layer receives the first notification message, the NAS layer sends a second notification message to the application layer.
S104. The application layer notifies a user that the data service is currently unavailable.

In this way, after the NAS layer notifies the application layer, the application layer may notify, in a user-aware manner, the user that access to the data service is currently barred, that is, the data service is currently unavailable. In this way, data processing efficiency of the user equipment is greatly improved.

The application layer of the user equipment may notify the user in the following manner: playing a voice to the user to indicate that the data service is currently unavailable, or displaying/hiding an icon on a display screen of the user equipment to indicate that the data service is currently unavailable. This is not limited in this embodiment of the present invention.

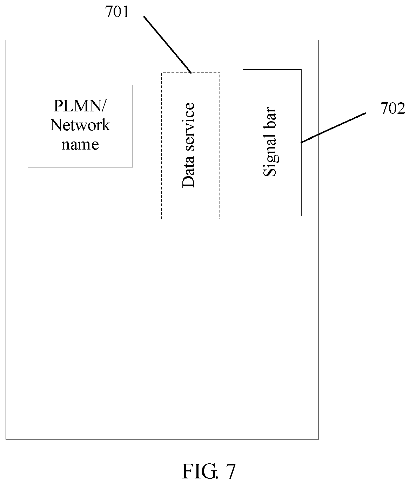

For example, as shown in FIG. 7, the user equipment may hide the icon on the display screen. An icon 701 is an icon indicating that the data service is available. In the diagram, a dashed line is used to indicate that the icon is hided (cannot be viewed by naked eyes of the user) if the data service is unavailable, to notify the user that the data is currently unavailable. Certainly, another manner may be used to indicate that the data service is currently unavailable.

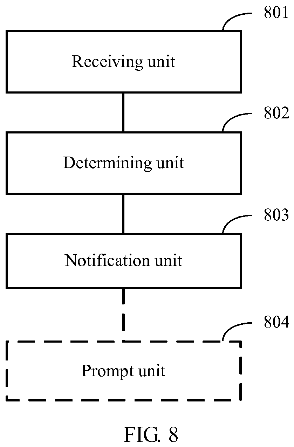

As shown in FIG. 8, an embodiment of the present invention provides user equipment 800. The user equipment may be specifically configured to perform steps in the method embodiment. The user equipment specifically includes:
a receiving unit 801, configured to receive a network configuration message sent by a network side, where the network configuration message includes a data service access control parameter;
a determining unit 802, configured to determine whether a value of the data service access control parameter is 0; and
a notification unit 803, configured to send a notification message when the value of the data service access control parameter is 0, where the notification message is used to indicate that the user equipment is barred from accessing a data service.

In addition, optionally, a prompt unit 804 is represented by a dashed line in FIG. 8. The user equipment 800 further includes the prompt unit 804, configured to: receive the notification message of the notification unit 803, and notify the user that access to the data service is currently barred, that is, the data service is unavailable. There are multiple prompt manners, for example, a prompt manner in the method embodiment.

In this embodiment of the present invention, because the value of the data service access control parameter in the received network configuration message is 0, the user equipment learns that access to the data service of the user equipment is barred, that is, the data service of the user equipment is actually unavailable, and then the user equipment notifies the user, so that the user can correctly perform a data service connection operation. In this way, data processing efficiency of the user equipment is improved, and user experience of the user equipment is also improved.

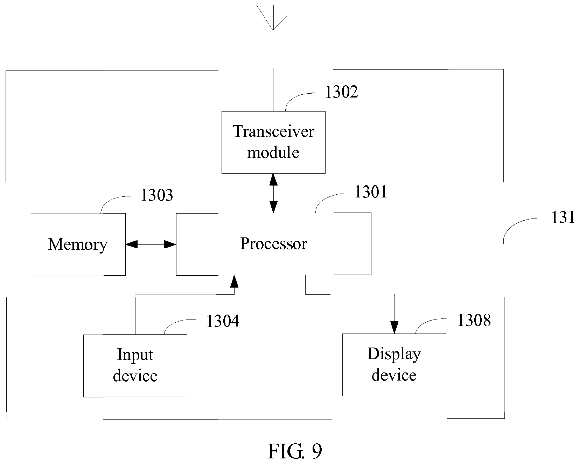

FIG. 9 is a schematic structural diagram of user equipment according to another embodiment of the present invention. As shown in FIG. 9, the user equipment may be a mobile phone, a tablet computer, or the like. In this embodiment, a mobile phone is used as an example for description.

As shown in FIG. 9, the mobile phone includes a processor 1301, a transceiver module 1302, a memory 1303, an input device 1304, and a display device 1308.

The processor 1301 of a mobile phone terminal 131 is a control center of the mobile phone terminal 131, and uses various interfaces and lines to connect all parts of the entire mobile phone. By running or executing a software program and/or a module stored in the memory 1303 and invoking data stored in the memory 1303, the processor 1301 executes various functions of the mobile phone terminal 131 and performs data processing, so as to perform overall monitoring on the mobile phone. Optionally, the processor 1301 may include one or more processing units. Preferably, an application processor and a modem processor may be integrated into the processor 1301. The application processor mainly processes an operating system, a user interface, an application program, and the like, and the modem processor mainly processes wireless communication. It may be understood that the modem processor may not be integrated into the processor 1301.

The transceiver module 1302 may be configured to receive and send information, or to receive and send a signal in a call process. In particular, for the mobile phone terminal 131, after receiving downlink information of a base station, the transceiver module 1302 sends the downlink information to the processor 1301 for processing, and sends uplink data of the mobile phone to the base station. In addition, the transceiver module 1302 may further communicate with a network and another device by means of wireless communication. Any communications standard or protocol may be used for the wireless communication, including but not limited to GSM (Global System of Mobile communication, Global system for mobile communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), an email, an SMS service (Short Messaging Service, short message service), and the like.

The memory 1303 may be configured to store a software program and a module. By running the software program and the module stored in the memory 1303, the processor 1301 executes various functional applications of the mobile phone terminal 131 and performs data processing. The memory 1303 may mainly include a program storage area and a data storage area. The program storage area may store an operating system, an application program required by at least one function (such as an audio play function or an image play function), and the like, and the data storage area may store data (such as audio data or a phonebook) created according to use of the mobile phone 131, and the like. In addition, the memory 1303 may include a high-speed random access memory, and may further include a nonvolatile memory, such as at least one magnetic disk storage component, a flash memory component, or another volatile solid-state storage component.

The input device 1304 may be configured to: receive entered digital or character information, and generate key signal input related to a user setting and function control of the mobile phone terminal 131. Specifically, the input device 1304 may include a touch panel and another input device. The touch panel is also referred to as a touchscreen and may collect a touch operation performed by a user on or near the touch panel (such as an operation performed by the user on the touch panel or near the touch panel by using any proper object or accessory, such as a finger or a stylus), and drive a corresponding connection apparatus according to a preset program. Optionally, the touch panel may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor, and can receive and execute a command sent by the processor. In addition, the touch panel may be, for example, a resistive, capacitive, infrared, or surface acoustic touch panel. In addition to the touch panel, the input device 1304 may further include another input device. Specifically, the another input device may include but is not limited to one or more of a physical keyboard, a function key (such as a volume control key or an on/off key), a trackball, a mouse, an operating lever, or the like.

The display 1308 may be configured to display information entered by the user or information provided for the user and various menus of the mobile phone terminal 131. The display device 1308 may include a display panel. Optionally, the display panel may be configured by using an LCD (Liquid Crystal Display, liquid crystal display), an OLED (Organic Light-Emitting Diode, organic light-emitting diode), or the like. Further, the touch panel may cover the display panel. When detecting the touch operation on or near the touch panel, the touch panel transmits the touch operation to the processor 1301 to determine a type of a touch event, and then the processor 1301 provides corresponding visual output on the display panel according to the type of the touch event.

In this embodiment, the transceiver module 1302 receives a network configuration message sent by a network side, and the network configuration message includes a data service access control parameter. For a specific format and content of the data service access control parameter, refer to the description in the method embodiment. Details are not described herein again. After receiving the network configuration message, the transceiver module 1302 stores the message in the memory 1303. The processor 1301 obtains the network configuration parameter from the memory 1303, and determines whether a value of the data service access control parameter is 0. When the processor 1301 determines that the value of the data service access control parameter is 0, the processor 1301 instructs the display device 1308 to display an icon to notify a user. The icon is used to indicate that a data service is currently unavailable. In this way, after viewing the icon on the display device, the user learns that the data service is unavailable, so that a case is avoided in which the user blindly initiates the data service when the user does not learn that the data service is unavailable, and data processing efficiency of the user equipment is improved.

In addition, an embodiment of the present invention further provides a portable electronic device, including:
a display;
one or more processors;
a memory; and
one or more programs, where the one or more programs are stored in the memory and configured to be executed by the one or more processors, the one or more programs include an instruction, and the instruction is used to:
   receive a network configuration message sent by a network side, where the network configuration message includes a data service access control parameter;
   determine whether a value of the data service access control parameter is 0; and
   when the value of the data service access control parameter is 0, send a notification message to notify a user, where the notification message is used to indicate that the user equipment is barred from accessing a data service.

In addition, the user may be notified in the following manner: playing a voice to the user to indicate that the data service is currently unavailable, or displaying/hiding an icon on a display screen of the user equipment to indicate that the data service is currently unavailable. This is not limited in this embodiment of the present invention.

In the several embodiments provided in this application, it should be understood that the disclosed user equipment and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces, indirect couplings or communication connections between the apparatuses or units, or electrical connections, mechanical connections, or connections in other forms. The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: various media that can store program code, such as a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A system message notification method, applicable to user equipment in a wireless communications network, wherein the user equipment is divided into a physical layer, a data link layer, a radio resource control layer, a non-access stratum, and an application layer in logic, and the method comprises:
receiving, by the radio resource control layer, a network configuration message sent by a network side, wherein the network configuration message comprises a data service access control parameter; and
when a value of the data service access control parameter is 0, sending, by the radio resource control layer, a first notification message to the non-access stratum, wherein the first notification message is used to indicate that the user equipment is barred from accessing a data service.

2. The method according to claim 1, wherein the data service access control parameter is specifically an ac-BarringForMO-Data parameter.

3. The method according to claim 1 or 2, wherein the method further comprises:
after receiving the first notification message, sending, by the non-access stratum, a second notification message to the application layer, wherein
the application layer notifies a user that the data service is currently unavailable.

4. The method according to claim 3, wherein the user equipment notifies the user in the following manner: playing a voice to the user to indicate that the data service is currently unavailable, or displaying/hiding an icon on a display screen of the user equipment to indicate that the data service is currently unavailable.

5. The method according to any one of claims 1 to 4, wherein the network configuration message is sent to the user equipment by using a SIB2 message.

6. User equipment, wherein the user equipment specifically comprises:
a receiving unit, configured to receive a network configuration message sent by a network side, wherein the network configuration message comprises a data service access control parameter;
a determining unit, configured to determine whether a value of the data service access control parameter is 0; and
a notification unit, configured to send a notification message when the value of the data service access control parameter is 0, wherein the notification message is used to indicate that the user equipment is barred from accessing a data service.

7. The user equipment according to claim 6, wherein the user equipment further comprises:
a prompt unit, configured to: receive the notification message of the notification unit, and notify a user that the data service is currently unavailable.

8. User equipment, comprising:
a display;
one or more processors;
a memory; and
one or more programs, wherein the one or more programs are stored in the memory and configured to be executed by the one or more processors, the one or more programs comprise an instruction, and the instruction is used to:
receive a network configuration message sent by a network side, wherein the network configuration message comprises a data service access control parameter;
determine whether a value of the data service access control parameter is 0; and
when the value of the data service access control parameter is 0, send a notification message to notify a user, wherein the notification message is used to indicate that the user equipment is barred from accessing a data service.

9. The user equipment according to claim 8, wherein the user is notified in the following manner: playing a voice to the user to indicate that the data service is currently unavailable, or displaying/hiding an icon on a display screen of the user equipment to indicate that the data service is currently unavailable.
